# EUROPÄISCHE PATENTSCHRIFT

(11) **EP 1 874 661 B1**
(45) Veröffentlichungstag und Bekanntmachung des Hinweises auf die Patenterteilung: **01.02.2012**
(21) Anmeldenummer: 05735019.1
(22) Anmeldetag: 19.04.2005
(51) Int. Cl.: B65D 90/22, B01J 19/00, B60K 15/03, B64D 37/32

(54) **BEHÄLTER ZUM SICHEREN AUFBEWAHREN EINER GEFÄHRLICHEN FLÜSSIGKEIT**
RECEPTACLE FOR SAFELY STORING A HAZARDOUS LIQUID
CONTENANT PERMETTANT DE CONSERVER EN TOUTE SECURITE UN LIQUIDE DANGEREUX

(43) Veröffentlichungstag der Anmeldung: 09.01.2008
(73) Patentinhaber: Thixo II GmbH, 44879 Bochum (DE)
(72) Erfinder: BLANKE-BOHNE, Johannes, 44879 Bochum (DE); MARQUARDT, Reinhold, 45884 Gelsenkirchen (DE)
(74) Vertreter: Kohler Schmid Möbus
(86) Internationale Anmeldenummer: PCT/DE2005/000716
(87) Internationale Veröffentlichungsnummer: WO 2006/111108

(56) Entgegenhaltungen:
- EP-A- 0 240 248
- EP-A- 0 282 193
- DE-U1- 20 011 086
- FR-A- 1 391 004

## Beschreibung

Die Erfindung betrifft einen Behälter zum Aufbewahren einer Flüssigkeit mit einer Vorrichtung zum Zuführen eines oder mehrerer die Flüssigkeit thixotropierender Stoffe zur Flüssigkeit im Behälter.

Derartige Behälter finden in der Chemie-Industrie Verwendung, wenn Flüssigkeiten durch Zugabe eines entsprechenden Agens verfestigt werden sollen (Thixotropie), ohne dass dazu eine wesentliche Temperaturänderung wie beim Verfestigen durch Gefrieren erforderlich ist. Auf ähnliche Weise wird beispielsweise auch ein 2-Komponenten Klebstoff verfestigt, jedoch ist hierbei die verfestigende Komponente ein Härter, der durch chemische Reaktion mit der ersten Komponente eine in der Regel irreversible Verfestigung bewirkt, während beim Thixotropieren eine Verfestigung durch physikalische Wechselwirkung der Bestandteile hervorgerufen wird, die auch wieder rückgängig gemacht werden kann (Rückverflüssigung).

Die Handhabung von Flüssigkeiten im täglichen Leben kann mit diversen Gefahren verbunden sein: Beispielsweise geht ein Unfall beim Transport von flüssigen Gefährgütern in der Regel damit einher, dass das Gefahrgut aus dem Behälter ausläuft und dabei die Umwelt nachhaltig und großräumig verseucht wird. Bei brennbaren Flüssigkeiten kann dabei eine explosionsartige Flammenentwicklung entstehen. Eine Thixotropie, also eine schnelle Verfestigung der gefährlichen Flüssigkeiten, könnte in solchen Notfällen dazu beitragen Katastrophen zu verhindern. Das gleiche gilt auch für die Verhinderung eines Brandes oder einer Explosion eines Kraftstofftanks bei Fahrzeugen, die in einen Unfall verwickelt wurden, oder zur Verhinderung von Umweltschäden bei Havarie eines Tankschiffes.

In der FR 1 391 004 ist ein Behälter zum Aufbewahren einer Flüssigkeit mit einer Vorrichtung zum Zuführen eines oder mehrerer die Flüssigkeit verfestigender Stoffe beschrieben, um die Flüssigkeit im Behälter unbrennbar zu machen. Als die brennbare Flüssigkeit verfestigende Stoffe sind konkret Polyurethan-Harze sowie Polyisocyanate, ein Katalysator und Porogen angegeben, die jedoch nach der Verfestigung der brennbaren Flüssigkeit - anders als thixotropierende Agentien - keine anschließende Rückverfiüssigung erlauben.

Als weiteres Beispiel sei das unbeabsichtigte Auslaufen eines Güllebehälters und eine dadurch hervorgerufene Umweltbelastung genannt. Auch hier könnte mit einer gezielten Einleitung einer thixotropischen "Reaktion" größeres Unheil vermieden werden. Sogar bei an sich harmlosen Flüssigkeiten, wie etwa Bier oder Wein in einem Getränkekeller, kann es möglicherweise vorteilhaft sein, einen unerwünschten Austritt in größeren Mengen aus dem jeweiligen Behälter, beispielsweise einem Fass oder Tank, schnell und wirksam zu verhindem.

Aufgabe der vorliegenden Erfindung ist es daher, einen Behälter der eingangs beschriebenen Art mit möglichst einfachen Mitteln so zu modifizieren, dass die darin befindliche Flüssigkeit unter bestimmten, definierten Umständen am Austritt bzw. Auslaufen gehindert wird.

Diese Aufgabe wird erfindungsgemäß mit den Merkmalen des Anspruchs 1 gelöst. Die Vorrichtung des Behälters ist so ausgestaltet, dass sie aufgrund eines Signals aus einem Signalgeber den oder die thixotropierenden Stoffe der Flüssigkeit im Behälter derart zuführt, dass die Flüssigkeit in einer geschlossenen, von einem gegebenenfalls nicht thixotropierten Rest der Flüssigkeit nicht durchdringbaren, äußeren Schicht innerhalb des Behälters vollständig thixotropiert, wobei die Vorrichtung zum Zuführen der thixotropierenden Stoffe eine Einrichtung zur Verteilung der thixotropierenden Stoffe in der Flüssigkeit im Behälter unter Einwirkung einer äußeren Kraft umfasst. Diese Schicht kann sich über die gesamte innere Oberfläche des Behälters erstrecken, aber eventuell auch nur über einen in sich geschlossenen Teilbereich, beispielsweise als Dichtfläche oder Pfropfen an einer Stelle, wo der Behälter von außen her verletzt wird. Denkbar sind auch Varianten, bei denen Teilbereiche der Flüssigkeit im Volumen des Behälters thixotropiert werden, etwa in Form von festen Wabenstrukturen innerhalb der Restflüssigkeit Durch die Verteileinrichtung wird eine schnelle und umfassende thixotropische Reaktion im Bedarfsfall erreicht.

Auf diese Weise kann sicher verhindert werden, dass beispielsweise brennbare, explosive, giftige oder in sonst einer Weise die U-mwelt gefährdende Flüssigkeit in definierten Situationen bei Vorliegen des entsprechenden Signals aus dem Signalgeber nicht mehr aus dem Behälter austreten kann, da sie durch Zugabe der thixotropierenden Stoffe zumindest in ihrer äußeren Schicht verfestigt wird. Die Thixotropie kann statt nur in der äußeren Schicht auch vollständig erfolgen, indem auch das Innere des Flüssigkeitsvolumens mit den thixotropierenden Stoffen versetzt und dadurch verfestigt wird. Damit wird ebenfalls ein unerwünschter Austritt der Flüssigkeit aus dem Behälter verhindert, wobei allerdings in der Regel das "Durchreagieren" im Inneren des Volumens eine erheblich längere Zeit in Anspruch nehmen wird, als das Thixotropieren lediglich der Außenhülle.

Besonders vorteilhaft ist die erfindungsgemäße Modifikation des Behälters, wenn die Flüssigkeit im Behälter ein Gefahrgut Ist.

Insbesondere bei brennbaren und/oder explosiven Flüssigkeiten, aber auch, wenn die Flüssigkeit im Behälter ätzend und/oder toxisch ist, insbesondere Säure, Lauge oder flüssige Giftstoffe enthält, kann mit Hilfe der Erfindung im Notfall ein Unglück verhindert werden. Dies gilt auch im Einsatz bei umweltschädlichen, insbesondere boden- und/oder grundwasserschädlichen Flüssigkeiten, beispielsweise Gülle, flüssige Weichmacher, Lösungsmittel und dergleichen.

Um das Vorliegen eines Notfalls oder auch schon ein sich anbahnendes Unglück sicher erkennen zu können, ist bei besonders bevorzugten Ausführungsformen des erfindungsgemäßen Behälters der Signalgeber mit einem oder mehreren Sensoren, die entsprechende Gefahrenzustände detektieren können, verbunden.

Bei speziellen Weiterbildungen dieser Ausführungsformen können die Sensoren je nach Anwendungsfall positive oder negative Beschleunigungen (so z.B. beim Aufprall eines Fahrzeugs) und/oder Temperaturen und/oder Temperaturänderungen (etwa bei Beginn eines Brandes) und/oder Lageänderungen des Behälters bzw. der Flüssigkeit im Behälter (beispielsweise beim Verrutschen oder Verschieben der Ladung in einem Transporter oder Tanker) und/oder Änderungen des Flüssigkeitsspiegels im Behälter bzw. Leckagezustände des Behälters und/oder Rauch- bzw. Gasentwicklung in der Umgebung des Behälters detektieren

Bei einer weiteren vorteilhaften Ausführungsform des erfindungsgemäßen Behälters ist der Signalgeber an ein manuelles Bedienelement, insbesondere an einen Notaus-Geber, angeschlossen, damit eine Bedienperson im Notfall "von Hand" die Thixotropierung einleiten kann.

Eine weitere bevorzugte Ausführungsform der Erfindung sieht vor, dass die thixotropierenden Stoffe aus der Gruppe der Oberflächen aktiven Metalloxide (= Aerosile^{®}) gewählt sind, insbesondere SiO₂ und/oder TiO₂ und/oder Al₂O₃ und/oder ZrO₂ und/oder Fe₂O₃. Generell kommen als Verstärker pyrogene Kieselsäuren in Frage, also Metalloxide in reiner Form oder als Gemische auf molekularer Ebene oder als feine Partikel.

Je nach Anwendungsfall können die thixotropienrnden Stoffe in Form von Pulver, Emulsion, Gel, Paste und/oder Aufschlämmung vorliegen. Als thixotropierende Stoffe werden insbesondere feinteilige, oberflächenaktive Festkörper mit einer Partikelgröße von weniger als 0,1 mm, vorzugsweise unter 0,05mm eingesetzt. Die freie Oberfläche dieser Partikel liegt zwischen 20 und 600 m² pro Gramm der Substanz. Die Oberfläche der Partikel verfügt dabei über chemische Gruppen, welche in der Lage sind, eine Wechselwirkung mit anderen Substanzen einzugehen. Diese Gruppen können Teil der Partikel selbst oder auch fremde Substanzen sein, die entweder fest mit den Partikeln gekoppelt oder auch über polare Kräfte mit den Partikeln assoziiert sind.

Eine besonders bevorzugte Ausführungsform des erfindungsgemäßen Behälters sieht vor, dass die thixotropierenden Stoffe in enger räumlicher Verbindung mit einem oder mehreren Trägermitteln vorliegen.

Bei vorteilhaften Weiterbildungen dieser Ausfühmngsform können die Trägermittel als Verpackung für die thixotropierenden Stoffe ausgebildet sein, wobei sich die Verpackung bei Berührung mit der Flüssigkeit im Behälter selbständig auflöst.

Bei anderen Weiterbildungen sind die Trägermittel als insbesondere textile Matten, Kissen, Schwämme oder Vliese ausgebildet in denen die thixotropierenden Stoffe aufgenommen sind.

Alternativ können die thixotropierenden Stoffe aber auch als Tabletten, Chips oder Granulat vorliegen.

Die Einbringung der thixotropierenden Stoffe in die Flüssigkeit im Behälter kann mechanisch, elektrisch, magnetisch oder pneumatisch erfolgten, beispielsweise durch Gasdruck, mittels Pumpen oder anderer geeigneter Einrichtungen.

Die Verteileinrichtung kann bei Ausführungsformen aus einer oder mehreren zunächst geschlossenen Hülsen bestehen, in denen die thixotropierenden Stoffe derart angeordnet sind, dass sie beim Öffnen der Hülse der Flüssigkeit im Behälter zugeführt werden.

Besonders vorteilhaft ist eine Weiterbildung, bei der die Hülse in der Flüssigkeit innerhalb des Behälters frei beweglich ist und über eine Sensorik und eine automatische Steuereinrichtung verfügt. So kann die Hülse nach Art eines automatischen U-Boots in der Flüssigkeit herum fahren und die thixotropierenden Stoffe wirksam verteilen.

Bei dazu ergänzenden oder alternativen Ausführungsformen umfasst die Einrichtung zur Verteilung der thixotropierenden Stoffe ein stationäres, im Behälter angeordnetes Rohr- und/oder Düsensystem, wobei bei Vorliegen eines Signals aus dem Signalgeber die thixotropierenden Stoffe mittels Druckgradienten in die Flüssigkeit im Behälter befördert werden. Die Düsen oder Austrittsöffnungen der Rohre werden bevorzugt an den Innenseiten der Behälterwände angeordnet sein, um im Bedarfsfall schnell zumindest eine geschlossene, von einem gegebenenfalls nicht thixotropierten Rest der Flüssigkeit nicht durchdringbare, äußere Schicht aus thixotropierter Substanz nach Art eines Kokons bzw. einer Verkapselung zu erzeugen.

Da gerade in Notfallsituationen große Schnelligkeit erforderlich ist, um ein größeres Unglück zu verhindern, wird bei besonders bevorzugten Ausführungsformen der Erfindung die Vorrichtung zum Zuführen von thixotropierenden Stoffen zur Flüssigkeit im Behälter und/oder die Art und Partikelgröße der thixotropierenden Stoffe so gewählt sein, dass bei Vorliegen eines Signals aus dem Signalgeber eine Thixotropierung der Flüssigkeit in einer geschlossenen äußeren Schicht in weniger als einer Stunde (etwa nach Havarie eines Tankschiffes), insbesondere in weniger als 5 Minuten (beispielsweise beim beginnenden Auslaufen eines größeren Tanks), vorzugsweise aber in weniger als 2 Sekunden (bei Verkehrsunfällen), erfolgt.

Um die Thixotropierung nach dem Anwendungsfall gegebenenfalls wieder rückgängig machen zu können, ist bei einer besonders bevorzugten Ausführungsform des erfindungsgemäßen Behälters eine Einrichtung zum Zuführen von Netzmittel, insbesondere von Tensiden; für eine Rückverflüssigung von thixotropiertem Material vorgesehen.

Der erfindungsgemäße Behälter kann mit einem Land-, Wasser- oder Luftfahrzeug fest oder lösbar verbunden sein.

Bei einer besonders bevorzugten Weiterbildung dieser Ausführungsformen, insbesondere in Verbindung mit Kraftfahrzeugen, kann der Signalgeber ein Auslöser eines Airbag-Systems des Fahrzeugs sein, wobei einfach das Auslösesignal für den Airbag, das ja per definitionem eine Indikation für einen Aufprallunfall des Fahrzeugs anzeigt, gleichzeitig als Notfallsignal zur Auslösung der thixotropischen Reaktion verwendet wird.

Statt an bzw. in einem Fahrzeug kann der erfindungsgemäße Behälter auch stationär angeordnet sein, etwa ein Chemikalientank in einer Fabrik oder ein großer Güllebehälter auf einem Bauernhof.

Der erfindungsgemäße Behälter kann oben offen oder als geschlossener Tank ausgeführt sein.

Bevorzugt ist ein Verfahren zum Betrieb eines erfindungsgemäßen Behälters, welches sich dadurch auszeichnet, dass bei Vorliegen eines Signals aus dem Signalgeber die Flüssigkeit im Behälter zumindest in einer geschlossenen, von einem gegebenenfalls nicht thixotropierten Rest der Flüssigkeit nicht durchdringbaren, äußeren Schicht innerhalb des Behälters vollständig thixotropiert wird. Die Flüssigkeit kann beispielsweise der Kraftstoff im Tank eines Fahrzeugs und das das Signal auslösende Ereignis ein Unfall sein. Dadurch wird dann zumindest noch Schlimmeres, wie etwa ein Brand oder eine Explosion, verhindert.

Von wirtschaftlicher großer Bedeutung ist eine Verfahrensvariante, bei der die thixotropierte Substanz anschließend, gegebenenfalls nach Ablauf eines Zeitintervalls, wieder rückverflüssigt wird, so dass die Flüssigkeit zumindest zum größten Teil wieder verwendet werden kann.

Vorteilhaft kann auch eine Verfahrensvariante sein, bei welcher die Flüssigkeit bereits vor dem Vorliegen eines Signals aus dem Signalgeber prophylaktisch teilweise thixotropiert wird. Dies ist beispielsweise beim geplanten Transport von Gefahrgütern empfehlenswert, etwa nach dem Beladen eines Tankers.

Erfindungsgemäss, wird die Teil-Thixotropierung der Flüssigkeit eine äußere feste Schicht erzeugt, die einen Kern aus Restflüssigkeit umgibt. Dies würde etwa bei einem modernen Doppelhüllentanker gewissermaßen eine "dritte Hülle" schaffen, die beispielsweise beim Auflaufen auf ein Riff einen zusätzlichen Schutz gegen eine Umweltkatastrophe durch auslaufendes Öl oder dergleichen bietet.

Als Standardverfahren schließlich eignet sich eine Verfahrensvariante, bei welcher der Behälter mit Flüssigkeit befüllt, anschließend durch Betätigen des Signalgebers eine prophylaktische teilweise Thixotropierung der Flüssigkeit im Behälter bewirkt, der Behälter an einen räumlich vom Befüllort entfernten Zielort verfrachtet, die thixotropierte Substanz rückverflüssigt und schließlich die Flüssigkeit aus dem Behälter entleert wird. Auf diese Weise kann durch Einsatz des erfindungsgemäßen Behälters gerade beim Transport von Gefahrgut ein ganz erheblich höheres Maß an Sicherheit für die Menschen und die Umwelt erreicht werden.

Weitere Vorteile der Erfindung ergeben sich aus der Beschreibung und der Zeichnung. Ebenso können die vorstehend genannten und die weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Ausführungsform des erfindungsgemäßen Behälters mit geschlossener Tasche und mit auffaltbaren Thixo-Matten;
- Fig. 2: eine Variante der Erfindung mit Doppelhüllentank;
- Fig. 3a: eine Variante der Erfindung mit Rohrsystem;
- Fig. 3b: ein sich öffnendes Rohrteil aus der Variante nach Fig. 3a;
- Fig. 3c: Düsen zum Ausblasen das Thixo-Mittels im Rohrsystem nach Fig. 3a;
- Fig. 4: eine Variante der Erfindung mit Trenn-Hülsen im geschlossenen Zustand (oben) und in geöffnetem Zustand (unten);
- Fig. 5: eine Variante der Erfindung mit Knick-Hülse im geschlossenen Zustand (oben) und in geöffnetem Zustand (unten);
- Fig. 6: eine Variante der Erfindung mit U-Boot-artiger Taucheinrichtung; und
- Fig. 7: eine Variante der Erfindung mit Fallgewicht in einer ballartigen Hülle.

Eine Notfallerkennung kann automatisch durch entsprechende Sensorik (z.B.: Beschleunigungsgeber, Lagegeber usw.) erfolgen oder aber auch durch eine Person, per Knopfdruck (Not-Aus) ausgelöst werden. Die Notfallerkennung ist im Bordcomputer der Behälterüberwachung (möglichst autarke Computereinheit) integriert. Von hier wird der Auslösevorgang an den intelligenten Teil der Thixo-Varianten, möglicherweise ferngesteuert, weitergeleitet. Daraufhin werden die Stell- und Schalteinheiten betätigt und der Thixotropiervorgang gestartet.

### • Gefahrgutbehälter

Zu den Gefahrgutbehältern kann man alle stationären und beweglichen Anlagen zählen, in denen Gefahrgut gespeichert wird. Beispiele: Tankwagen, Kesselwagen der Bahn, Kraftstofftanks im Kraftfahrzeugen, Schiffe und Flugzeuge, Tanker der Hochsee- und Binnenschifffahrt, Heizöltanks, sowie Tanklager von Gefahrgütern.

### • Thixomaterial

Thixotropierende Stoffe sind in der Lage Flüssigkeiten so zu verfestigen, dass ein Auslaufen, bzw. ungewollte Verteilung über große Flächen bzw. Räume der Umwelt verhindert wird. Thixotropierende Stoffe sind staubförmig können aber auch in Flüssigkeiten gemischt werden.

### • Rückverflüssigung und Netzmittel

Netzmittel sind in der Lage durch Thixotropie verfestigte Flüssigkeiten wieder in die ursprüngliche flüssige Form umzuwandeln. Die zugeführten thixotropierenden Stoffe und Netzmittel können verfahrenstechnisch durch z.B. Filtern oder destillieren zurückgewonnen werden.

### • Thixomatten

Sie fungieren als Träger von thixotropierenden Stoffen. Diese können trocken eingepresst oder bereits in flüssiger Form getränkt sein. Die Matten können aus Kunststoff - Vlies gefertigt sein. Sie können mit Kunststoff - Fäden oder dünnen Metalldrähten oder Maschen durchsetzt sein, wodurch eine Zugbeanspruchung erhöht werden kann. Thixomatten sind rollbar, faltbar und als "Endlosband" denkbar.

Eine spezielle Ausführungsform sind Matten mit kleinen Kapseln mit dünnen Kunststoffhäuten (vgl. Luftnoppenfolie zu Verpackungszwecken), die durch einen ausgelösten Druckaufbau zerstört werden, um das Thixomittel freizugeben. Damit ist eine gezielte Verteilung des Mittels möglich. Denkbar sind auch Kapseln mit Häuten, die sich im Gefahrgut auflösen.

### • Thixoklappmatten

Sollen Thixomatten eine geometrische Stabilität erhalten, z.B. weil sie klappbar sein sollen, wird die Matte mit einem Metallrahmen versehen, der gewünschte mechanische Eigenschaften aufweist (z.B. klappbar oder beweglich über Seilzug).

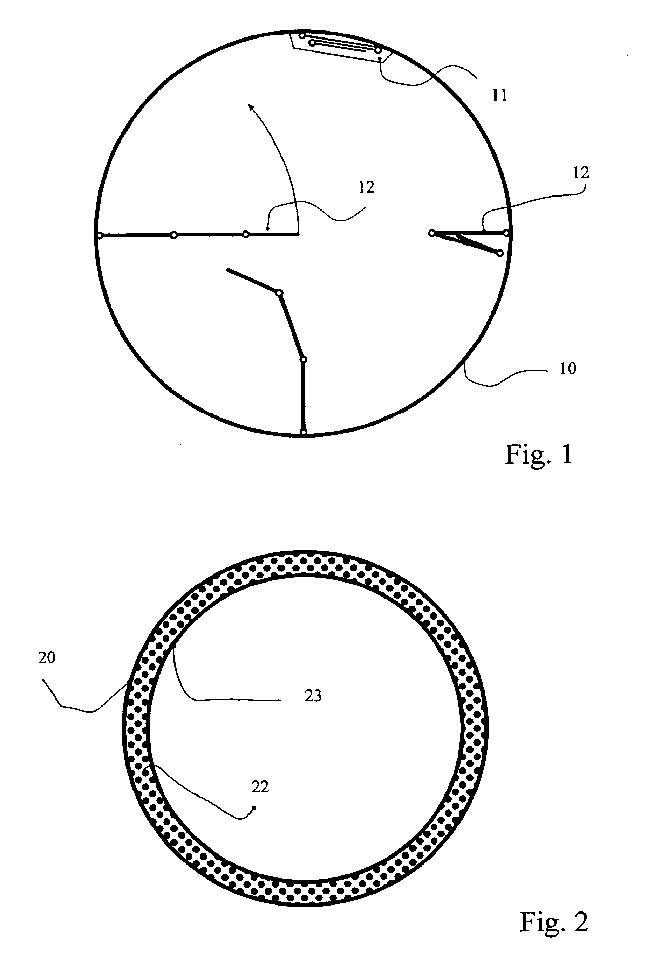

### • Taschen-Variante (Fig. 1)

Wie in Fig. 1 schematisch dargestellt, sind an der Wand eines Behälters 10 Taschen 11 angebracht, in denen Thixoklappmatten 12 im gefalteten Zustand untergebracht sind. Im Gefahrenfall öffnen sich die Taschen 11 und die Thixoklappmatten 12 entfalten sich, je nachdem wieviel Klappmatten benötigt werden um ca. bis zur Behältermitte zu gelangen. Während des Aufklappvorganges werden die Thixomittel an das Gefahrgut abgegeben und damit im Gefahrgut möglichst homogen verteilt.

### • Doppeltank-Variante (Fig. 2)

Die Wand eines in Fig. 2 dargestellten Behälters 20, in der Regel eines Tanks, ist doppelwandig ausgelegt. Dabei kann die innere Wand 23 möglicherweise aus Kunststoff bestehen. Im Zwischenraum der beiden Wände wird Thixomaterial 22 eingebracht. Als Vorteil wird bei einer örtlichen Beschädigung (Beschuss oder Einstich mit lanzenförmigen Gegenständen) der örtlich begrenzte Bereich durch die Thixomittel 22 pfropfenartig verfestigt.

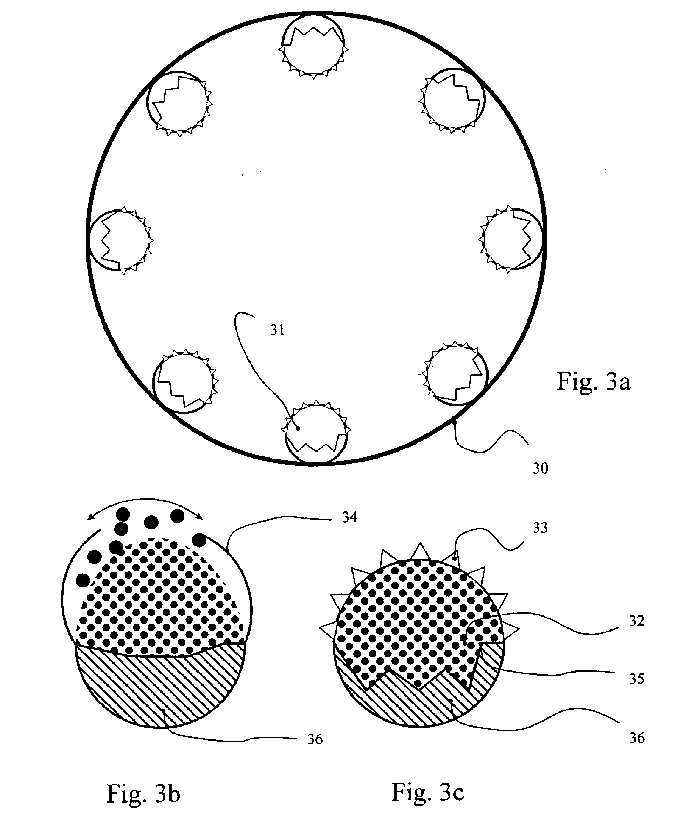

### • Rohrsystem-Varianten (Fig. 3a-c)

Diese Variante ist schematisch in den Figuren 3a bis 3c dargestellt und kommt in erster Linie bei Neubauten von Tankbehältern in Frage. Ein zweiteiliges Rohr 31 enthält eine flexible Membran 35 in Längsrichtung. Die Membran 35 trennt einen Hochdruckteil 36 von einem Magazinteil für das Thixomittel 32. Im Magazinteil sind in bestimmten Abständen Düsen 33 eingesetzt, die das Thixomaterial 32 in verschiedene Richtungen in das Gefahrgut einspritzen können. Die Membran 35 kann durchaus schon unter einer gewissen Vorspannung stehen, so dass im Hochdruckteil 36 bereits eine geringe Druckerhöhung ausreicht um das Thixomaterial 32 durch die Düsen 33 zu drücken. Die Düsen 33 sind erst geöffnet, falls ein gewisser Vordruck überschritten wird und bleiben dann offen. Eventuell schließen sie wieder mit einer gewissen Hysterese oder sie haben eine Rückschlageigenschaft. Die Rohrverteilung wird so abgestimmt, dass sich ein fester Mantel um den eventuell verbleibenden flüssigen inneren Kern bildet.

Eine weitere, in der Zeichnung nicht dargestellte Variante des Rohrsystems ist so aufgebaut, dass zwei ineinander liegende Rohre (bzw. Teilrohre) durch Drehung (z.B. ¼ -Drehung, Prinzip Gewürzstreuer) Auskippschlitze freimachen. Auch hier kann das Thixomittel 32 schon mittels einer flexiblen Membran 35 unter Vordruck gehalten werden.

Möglich ist aber auch ein Aufklappen des Magazinteiles, wobei das Thixomaterial 32 durch die vorgespannte Membran 35 herausgedrückt wird. Bei dieser in Fig. 3b gezeigten Variante umfasst das Rohr 31 statt der in Fig. 3c dargestellten Düsen 33 eine aufklappbare Außenwand 34.

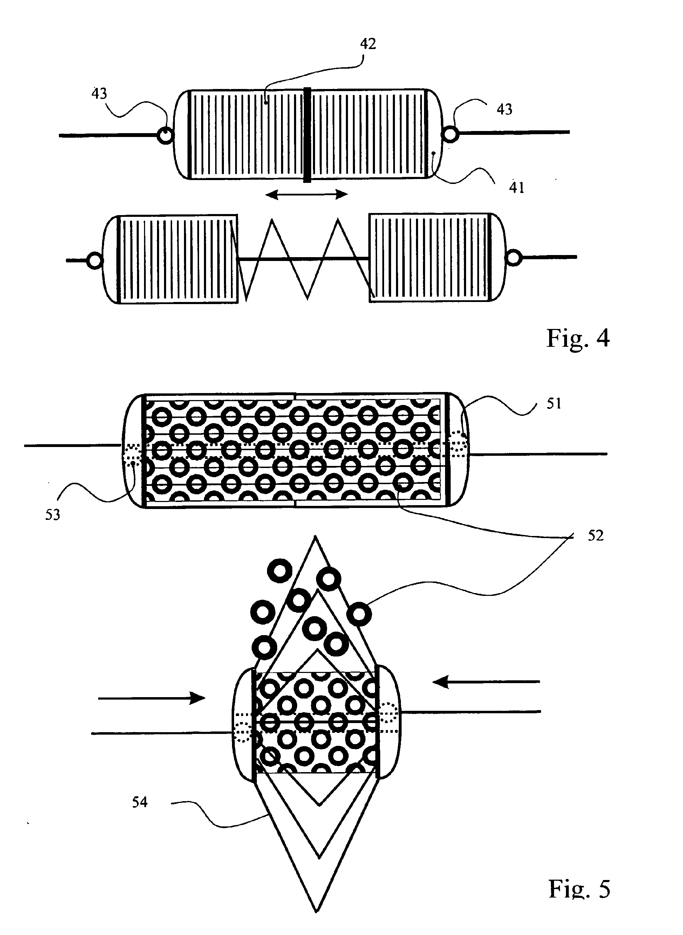

### • Hülsen Varianten (Fig. 4 und 5)

Diese Variante hat den Vorteil, dass sehr geringe Umbaumaßnahmen an den Tankanlagen notwendig sind.

Wie in Fig. 4 dargestellt, können in einer zweigeteilten Hülse 41 Endlos-Thixomatten 42 gefaltet und gepresst untergebracht sein. Die beiden Hülsenkammern können gleich oder verschieden groß sein. Es kann jedoch auch sinnvoll sein, nur eine Kammer auszubilden. Dies ist abhängig vom Ort der Anbringung im Gefahrgutbehälter.

Die Thixohülse 41 kann über Ösen 43 mit einem Zugseil **waagerecht durch das Gefahrgut** gezogen werden (oder mit eigenem Antrieb auf dem Seil fahren). Dabei öffnet sich die Hülse 41 (z.B. durch Druckerzeugung mittels Stickstofftabletten) und der Stapel Thixomatten 42 wird abgeblättert und verteilt dabei das Thixomittel im Gefahrgut. Im Kopf der Hülse 41 kann sich ein Antrieb befinden, der die Hülse 41 selbständig auf dem Seil bewegt. Der Antrieb kann elektrisch (Batterie) oder aber auch pneumatisch realisiert werden, wobei der notwendige Druck z.B. durch Stickstoff-Tabletten erzeugt werden kann.

Die Thixohülse 41 kann aber auch senkrecht durch das Gefahrgut fallengelassen werden. Dabei wird ein Kopf der Hülse 41 durch Haftmagnet oder an einer der Ösen 43 am Tankbehälter befestigt und vom Hauptteil der Hülse 41 gelöst (z.B. Bajonettverschluss oder Verschraubung). Der zweite Hülsenteil mit den Thixomattenstapel 42 wird in das Gefahrgut fallen gelassen. Der dazugehörige Hülsenkopf kann zur Beschleunigung ein Fallgewicht enthalten. Der Stapel wird im Fallen abgeblättert und verteilt das Thixomittel gleichmäßig. Für diesen Anwendungsfall sind keine baulichen Maßnahmen am Behälter notwendig.

Beide obigen Varianten können auch so ausgeführt werden, dass an einem Seil mehrere Hülsen 41 angebracht sind, die durch Zug alle gleichzeitig geöffnet werden.

Wenn keine Thixomatten 42 verwendet werden sollen, können die thixotropierenden Stoffe (Thixostaub,bzw. Flüssigkeit) auch durch einen Stempel herausgedrückt werden (zwei Seile in Gegenrichtung gezogen)

Eine andere, in Fig. 5 gezeigte Konstruktion der Hülse 51 kann so ausgebildet sein, dass der z.B. in Streifen perforierte Mantel der Hülse 51 durch Druck nach außen aufbricht (Knickhülse), indem die Zylinderachse verkürzt wird und die entstehenden Streifen 54 eingeknickt werden. Das Aufbrechen einer solchen Hülse 51 kann aber auch durch Zündung von Stickstofftabletten (Erzeugung von Innendruck, Bersthülse) ausgelöst werden. Ein Transport der Hülse 51 durch den Behälter kann wiederum durch ein an einer Öse 53 angebrachtes Seil erfolgen.

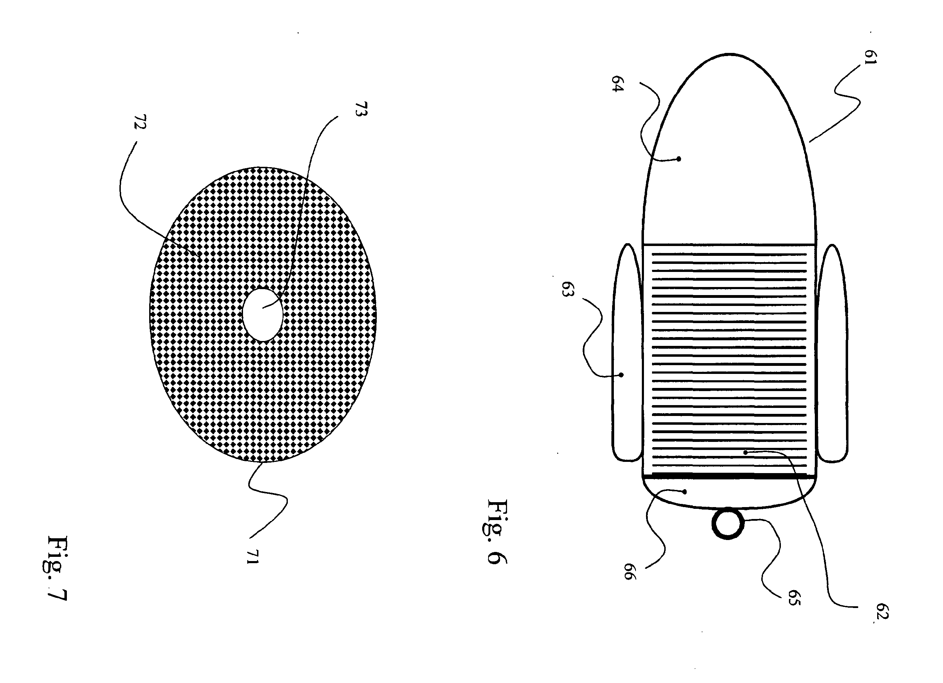

### • "U-Boot"-Variante (Fig. 6)

Eine weitere Variante ist eine in Fig. 6 gezeigte, sich autark bewegende hülsenförmige Taucheinrichtung 61, die auf online berechneten Bahnen durch das Gefahrgut navigiert wird. Hier ist eine Sensorik, Elektronik und ein Mikrocontroller nötig, die schematisch als Steuerkopf 64 dargestellt sind. Das "U-Boot" muss einen eigenen Antrieb haben und in allen Richtungen manövrierfähig sein. In der Zeichnung sind der Antrieb und die Lenktechnik durch Seitenflossen 63 angedeutet. Die Sensorik muss die eigene Lage und die Geometrie des Behälters erfassen können. Sinnvoll ist diese Variante, wenn sehr große Behälter (Schiffsladung) mit Thixomitteln geimpft werden sollen. Im gezeigten Ausführungsbeispiel sind Endlos-Vliesmatten 62 mit eingepresstem Thixo-Mittel in der Taucheinrichtung 61 vorgesehen.

Das "U-Boot" kann bei anderen Ausführungsformen am hinteren Deckel 66 auch mit Düsen ausgestattet sein, wobei das Thixomaterial staubförmig oder flüssig ausgestoßen wird. Eine Fixierungsöse 65 am hinteren Deckel 66 kann dem Andocken dienen.

Auch hier sind keine baulichen Änderungen am Behälter nötig. Das "U-Boot" ist flexibel einsetzbar, da transportierbar. Wenn beispielsweise ein Öltanker in Seenot geraten würde, lässt sich möglicherweise noch per Hubschrauber ein solches "U-Boot" einsetzen.

### • Ball-Variante mit Fallkern (Fig. 7)

Eine weitere, besonders einfache Variante schließlich umfasst eine ballartige Kapsel 71, die mit thixotropierenden Stoffen 72 gefüllt ist und in ihrem Inneren einen schweren Fallkern 73 trägt, der die Kapsel 71 nach deren Hineinwerfen die Flüssigkeit des Behälters zunächst aufgrund der Gravitation relativ schnell nach unten sinken lässt, wobei die Kapsel 71 Thixo-Material 72 an die umgebende Flüssigkeit im Behälter abgeben kann.

## Patentansprüche

1. Behälter (10; 20; 30) zum Aufbewahren einer Flüssigkeit mit einer Vorrichtung (11,12; 23; 31; 41; 51; 61; 71) zum Zuführen eines oder mehrerer die Flüssigkeit thixotropierender Stoffe (22;32;52;72) zur Flüssigkeit im Behälter (10; 20; 30),
**dadurch gekennzeichnet,**
**dass** die Vorrichtung (11,12; 23; 31; 41; 51; 61; 71) einen Signalgeber und einen oder mehrere die Flüssigkeit im Behälter (10; 20; 30) thixotropierende Stoffe (22;32;52;72) umfasst und so ausgestaltet ist, dass sie aufgrund eines Signals aus dem Signalgeber den oder die thixotropierenden Stoffe (22;32;52;72) der Flüssigkeit im Behälter (10; 20; 30) derart zuführt, dass die Flüssigkeit in einer geschlossenen äußeren Schicht innerhalb des Behälters (10; 20; 30) vollständig thixotropiert, d.h. verfestigt, welche Schicht von einem gegebenenfalls nicht thixotropierten Rest der Flüssigkeit nicht durchdringbar ist,
und **dass** die Vorrichtung (11,12; 23; 31; 41; 51; 61; 71) eine Einrichtung zur Verteilung der thixotropierenden Stoffe (22;32;52;72) in der Flüssigkeit im Behälter (10; 20; 30) unter Einwirkung einer äußeren Kraft umfasst.

2. Behälter nach Anspruch 1, **dadurch gekennzeichnet, dass** der Signalgeber mit einem oder mehreren Sensoren, die Gefahrenzustände detektieren können, verbunden ist, und dass die Sensoren positive oder negative Beschleunigungen und/oder Temperaturen und/oder Temperaturänderungen und/oder Lageänderungen des Behälters (10; 20; 30) bzw. der Flüssigkeit im Behälter (10; 20; 30) und/oder Änderungen des Flüssigkeitsspiegels im Behälter (10; 20; 30) bzw. Leckagezustände des Behälters (10; 20; 30) und/oder Rauch- bzw. Gasentwicklung in der Umgebung des Behälters (10; 20; 30) detektieren können.

3. Behälter nach einem der vorhergehenden Ansprüche, **dadurch gekennzeichnet, dass** die thixotropierenden Stoffe (22;32;52;72) aus der Gruppe der Oberflächen aktiven Metalloxide gewählt sind, insbesondere SiO₂ und/oder TiO₂ und/oder Al₂O₃ und/oder ZrO₂ und/oder Fe₂O₃.

4. Behälter nach einem der vorhergehenden Ansprüche, die thixotropierenden Stoffe (22;32;52;72) in enger räumlicher Verbindung mit einem oder mehreren Trägermitteln vorliegen.

5. Behälter nach einem der vorhergehenden Ansprüche, **dadurch gekennzeichnet, dass** die Vorrichtung (11, 12; 23; 31; 41; 51; 61; 71) zum Zuführen von thixotropierenden Stoffen (22;32;52;72) zur Flüssigkeit im Behälter (10; 20; 30) und/oder die Art und Partikelgröße der thixotropierenden Stoffe (22;32;52;72) so gewählt sind, dass bei Vorliegen eines Signals aus dem Signalgeber eine Thixotropierung der Flüssigkeit in einer geschlossenen äußeren Schicht in weniger als einer Stunde, insbesondere in weniger als 5 Minuten, vorzugsweise in weniger als 2 Sekunden, erfolgt.

6. Behälter nach einem der vorhergehenden Ansprüche, **dadurch gekennzeichnet, dass** eine Einrichtung zum Zuführen von Netzmittel, insbesondere von Tensiden; für eine Rückverflüssigung von thixotropiertem Material vorgesehen ist.

7. Behälter nach einem der vorhergehenden Ansprüche, **dadurch gekennzeichnet, dass** der Behälter (10; 20; 30) mit einem Land-, Wasser-oder Luftfahrzeug fest oder lösbar verbunden ist, und dass der Signalgeber ein Auslöser eines Airbag-Systems des Fahrzeugs ist.

8. Verfahren zum Betrieb eines Behälters (10; 20; 30) nach einem der Ansprüche 1 bis 7, **dadurch gekennzeichnet, dass** bei Vorliegen eines Signals aus dem Signalgeber die Flüssigkeit im Behälters (10; 20; 30) in einer geschlossenen äußeren Schicht innerhalb des Behälters (10; 20; 30) vollständig thixotropiert d.h. verfestigt, welche Schnicht von einem gegebenenfalls nicht thixotropierten Rest der Flüssigkeit nicht durchdringbaren, ist, und die thixotropierte Substanz anschließend, gegebenenfalls nach Ablauf eines vorgegebenen Zeitintervalls, wieder rückverflüssigt wird.

9. Verfahren nach Anspruch 8, **dadurch gekennzeichnet, dass** der Behälter (10; 20; 30) mit Flüssigkeit befüllt, anschließend durch Betätigen des Signalgebers eine prophylaktische teilweise Thixotropierung der Flüssigkeit im Behälter (10; 20; 30) bewirkt, der Behälter (10; 20; 30) an einen räumlich vom Befüllort entfernten Zielort verfrachtet, die thixotropierte Substanz rückverflüssigt und schließlich die Flüssigkeit aus dem Behälter (10; 20; 30) entleert wird.

## Claims

1. A tank (10; 20; 30) for storing a liquid with a device (11,12; 23; 31; 41; 51; 61; 71) for feeding one or more substances (22; 32; 52; 72) thixotroping the liquid to the liquid in the tank (10; 20; 30), **characterised in that** the device (11,12; 23; 31; 41; 51; 61; 71) comprises a signal transmitter and one or more substances (22; 32; 52; 72) thixotroping the liquid in the tank (10; 20; 30) and is designed such that it feeds the thixotroping substance or substances (22; 32; 52; 72) to the liquid in the tank (10; 20; 30), as a result of a signal from the signal transmitter, so that the liquid completely thixotropes, i.e. solidifies, in a closed outer layer inside the tank (10; 20; 30), which layer cannot be penetrated by a residue of the liquid, not thixotroped where applicable, and that the device (11,12; 23; 31; 41; 51; 61; 71) incorporates a facility for distributing the thixotroping substances (22; 32; 52; 72) in the liquid in the tank (10; 20; 30) under the influence of an external force.

2. The tank according to claim 1, **characterised in that** the signal transmitter is connected to one or more sensors which are able to detect dangerous situations, and that the sensors can detect positive or negative accelerations and/or temperatures and/or temperature variations and/or position variations of the tank (10; 20; 30) or the liquid in the tank (10; 20; 30) and/or variations in the liquid level in the tank (10; 20; 30) or leakage conditions of the tank (10; 20; 30) and/or smoke or gas development in the area surrounding the tank (10; 20; 30).

3. The tank according to anyone of the preceding claims, **characterised in that** the thixotroping substances (22; 32; 52; 72) are selected from the group of surface active metal oxides, in particular SiO₂ and/or TiO₂ and/or Al₂O₃ and/or ZrO₂ and/or Fe₂O₃.

4. The tank according to anyone of the preceding claims, **characterised in that** the thixotroping substances (22; 32; 52; 72) are present in close spatial connection with one or more carrier agents.

5. The tank according to anyone of the preceding claims, **characterised in that** the device (11,12; 23; 31; 41; 51; 61; 71) for feeding thixotroping substances (22; 32; 52; 72) to the liquid in the tank (10; 20; 30) and/or the type and particle size of the thixotroping substances (22; 32; 52; 72) are chosen so that in the presence of a signal from the signal transmitter, thixotropy of the liquid takes place in a closed outer layer in less than one hour, in particular in less than 5 minutes, preferably in less than 2 seconds.

6. The tank according to anyone of the preceding claims, **characterised in that** a device for feeding surface-active agents, particularly tensides, is provided for re-liquefaction of thixotroped material.

7. The tank according to anyone of the preceding claims, **characterised in that** the tank (10; 20; 30) is connected permanently or detachably to a land vehicle, water vessel or aircraft, and that the signal transmitter is a release device for an airbag system of the vehicle, vessel or aircraft.

8. A method for operating a tank (10; 20; 30) according to anyone of claims 1 through 7, **characterised in that** in the presence of a signal from the signal transmitter, the liquid in the tank (10; 20; 30) is completely thixotroped, i.e. solidified, in a closed outer layer inside the tank (10; 20; 30), which layer cannot be penetrated by a residue of the liquid, not thixotroped where applicable, and that the thixotroped substance is subsequently re-liquefied after expiration of a predetermined time interval.

9. The method according to claim 8, **characterised in that** the tank (10; 20; 30) is filled with liquid, subsequently a prophylactic partial thixotropy of the liquid in the tank (10; 20; 30) is effected by actuating the signal transmitter, the tank (10; 20; 30) is freighted to a destination spatially separate from the place of filling, the thixotroped substance is re-liquefied, and finally the liquid is drained from the tank (10; 20; 30).

## Revendications

1. Récipient (10 ; 20 ; 30) permettant de conserver un liquide, avec un dispositif (11, 12 ; 23 ; 31 ; 41 ; 51 ; 61 ; 71) pour amener au liquide présent dans le récipient (10 ; 20 ; 30) une ou plusieurs substances (22 ; 32 ; 52 ; 72) thixotropant le liquide,
**caractérisé en ce**
**que** le dispositif (11, 12 ; 23 ; 31 ; 41 ; 51 ; 61 ; 71) comprend un transmetteur de signaux et une ou plusieurs substances (22 ; 32 ; 52 ; 72) thixotropant le liquide présent dans le récipient (10 ; 20 ; 30) et est conçu de façon à amener au liquide présent dans le récipient (10 ; 20 ; 30) la ou les substances thixotropantes (22 ; 32 ; 52 ; 72) sur la base d'un signal provenant du transmetteur de signaux de telle manière que le liquide soit complètement thixotropé, c'est-à-dire solidifié, en une couche extérieure fermée à l'intérieur du récipient (10 ; 20 ; 30), laquelle couche n'est pas traversable par un reste de liquide éventuellement non thixotropé,
et **que** le dispositif (11, 12 ; 23 ; 31 ; 41 ; 51 ; 61 ; 71) comprend un équipement pour répartir les substances thixotropantes (22 ; 32 ; 52 ; 72) dans le liquide présent dans le récipient (10 ; 20 ; 30) sous l'influence d'une force extérieure.

2. Récipient selon la revendication 1, **caractérisé en ce que** le transmetteur de signaux est relié à un ou plusieurs capteurs capables de détecter des états dangereux et que les capteurs peuvent détecter des accélérations et/ou des températures et/ou des variations de température positives ou négatives et/ou des changements de position du récipient (10 ; 20 ; 30) ou du liquide dans le récipient (10 ; 20 ; 30) et/ou des variations du niveau de liquide dans le récipient (10 ; 20 ; 30) ou des états de fuite du récipient (10 ; 20 ; 30) et/ou un dégagement de fumée ou de gaz dans l'environnement du récipient (10 ; 20 ; 30).

3. Récipient selon une des revendications précédentes, **caractérisé en ce que** les substances thixotropantes (22 ; 32 ; 52 ; 72) sont choisies parmi le groupe des oxydes métalliques tensioactifs, en particulier SiO₂ et/ou TiO₂ et/ou Al₂O₃ et/ou ZrO₂ et/ou Fe₂O₃.

4. Récipient selon une des revendications précédentes, **caractérisé en ce que** les substances thixotropantes (22 ; 32 ; 52 ; 72) sont présentes en étroite liaison spatiale avec un ou plusieurs agents porteurs.

5. Récipient selon une des revendications précédentes, **caractérisé en ce que** le dispositif (11, 12 ; 23 ; 31 ; 41 ; 51 ; 61 ; 71) pour amener une ou plusieurs substances thixotropantes (22 ; 32 ; 52 ; 72) au liquide présent dans le récipient (10 ; 20 ; 30) et/ou la nature et la taille de particules des substances thixotropantes (22 ; 32 ; 52 ; 72) sont choisis de façon qu'en présence d'un signal du transmetteur de signaux, une thixotropation du liquide en une couche extérieure fermée ait lieu en moins d'une heure, en particulier en moins de 5 minutes, de préférence en moins de 2 secondes.

6. Récipient selon une des revendications précédentes, **caractérisé en ce qu'**il est prévu un équipement permettant d'amener un agent mouillant, en particulier des agents tensioactifs, pour reliquéfier la matière thixotropée.

7. Récipient selon une des revendications précédentes, **caractérisé en ce que** le récipient (10 ; 20 ; 30) est lié de manière fixe ou amovible à un véhicule terrestre, nautique ou aérien et que le transmetteur de signaux est un déclencheur d'un système d'airbag du véhicule.

8. Procédé d'utilisation d'un récipient (10 ; 20 ; 30) selon une des revendications 1 à 7, **caractérisé en ce qu'**en présence d'un signal du transmetteur de signaux, le liquide présent dans le récipient (10 ; 20 ; 30) est complètement thixotropé, c'est-à-dire solidifié, en une couche extérieure fermée à l'intérieur du récipient (10 ; 20 ; 30), laquelle couche n'est pas traversable par un reste de liquide éventuellement non thixotropé, et la substance thixotropée est ensuite de nouveau liquéfiée, le cas échéant à l'expiration d'un intervalle de temps prédéfini.

9. Procédé selon la revendication 8, **caractérisé en ce que** le récipient (10 ; 20 ; 30) est rempli de liquide, une thixotropation prophylactique partielle du liquide présent dans le récipient (10 ; 20 ; 30) est provoquée par actionnement du transmetteur de signaux, le récipient (10 ; 20 ; 30) est transporté à un lieu de destination spatialement éloigné du lieu de remplissage, la substance thixotropée est reliquéfiée et enfin le liquide est vidé du récipient (10 ; 20 ; 30).
